# EUROPÄISCHE PATENTSCHRIFT

(11) **EP 2 585 338 B1**
(45) Veröffentlichungstag und Bekanntmachung des Hinweises auf die Patenterteilung: **05.10.2016**
(21) Anmeldenummer: 11724133.1
(22) Anmeldetag: 07.06.2011
(51) Int. Cl.: B60N 2/22, B60N 2/20, B60N 2/16, B60N 2/235

(54) **BESCHLAGSYSTEM FÜR EINEN FAHRZEUGSITZ**
RECLINER SYSTEM FOR A VEHICLE SEAT
SYSTÈME DE FERRURE POUR UN SIÈGE DE VÉHICULE

(30) Priorität: 10.12.2010 DE 102010054314; 03.11.2010 DE 102010050542; 03.11.2010 DE 202010015171 U; 22.06.2010 DE 102010025112
(43) Veröffentlichungstag der Anmeldung: 01.05.2013
(73) Patentinhaber: Johnson Controls Components GmbH & Co. KG, 67657 Kaiserslautern (DE)
(72) Erfinder: ASSMANN, Uwe, 42855 Remscheid (DE); PETERS, Christoph, 42929 Wermelskirchen (DE); MAYER, Thomas, 42853 Remscheid (DE); LEHMANN,Ulrich, 53347 Alfter (DE); HILLE, Gunther, 42897 Remscheid (DE)
(74) Vertreter: Liedhegener, Ralf
(86) Internationale Anmeldenummer: PCT/EP2011/002771
(87) Internationale Veröffentlichungsnummer: WO 2011/160771

(56) Entgegenhaltungen:
- DE-A1-102008 045 349

## Beschreibung

Die Erfindung betrifft ein Beschlagsystem für einen Fahrzeugsitz.

Ein Beschlagsystem dieser Art ist aus der DE 103 35 869 A1 bekannt. Eine spezielle Feder beaufschlagt die Übertragungsstange in der Verriegelungsrichtung für ein Entklappern. Zusätzlich sichert die besagte Feder die Übertragungsstange gegen eine Bewegung in axialer Richtung.

Eine Stütze, die als Anschlag für einen Betätigungshebel wirkt, wenn dieser entgegen der Betätigungsrichtung beaufschlagt wird, ist in der DE 10 2008 045 349 A1 offenbart. Die Stütze ist an einem mit einem ersten Beschlagteil verbundenen Adapter angebracht, mittels welchem der Beschlag an der Struktur des Sitzes befestigt ist. In abgewandelter Ausführung ist die Stütze mit einem zweiten Beschlagteil und der Lehne verbunden. Dadurch, dass die Stütze entweder an dem Adapter oder an der Lehne befestigt ist, ist bei dieser Lösung für jeden Fahrzeugsitztyp eine projektspezifische Stütze vorzusehen, denn Adapter und Lehne sind für jedes Projekt unterschiedlich, während die Beschläge als Komponenten Gleichteile darstellen.

Der Erfindung liegt die Aufgabe zu Grunde, ein Beschlagsystem der eingangs genannten Art zu verbessern, insbesondere eine modulare Lösung für einen Hebelanschlag zu schaffen, die unabhängig von der Geometrie der Sitzstrukturbauteile ist. Diese Aufgabe wird erfindungsgemäß durch ein Beschlagsystem mit den Merkma len des Anspruches 1 gelöst. Vorteihafte Ausgestaltungen sind Gegenstand der Unteransprüche.

Das erfindungsgemäße Beschlagsystem umfasst wenigstens einen Beschlag, eine Übertragungsstange, einen Handhebel, ein Anschlagmodul und optional eine Lehnenkompensationsfeder. Das Anschlagmodul, welches in Wirkverbindung einerseits mit dem Handhebel und andererseits mit der Übertragungsstange steht, welches relativ zu einem der Beschlagteile (11, 12) drehbar ist und welches in wenigstens eine Drehrichtung den Handhebel und eines der Beschlagteile relativ zueinander in Anschlag bringt, erfüllt mehrere Funktionen.

Die erste Funktion, die sich aus der Wirkverbindung ergibt, ist die Übertragung des Drehmomentes vom Handhebel auf die Übertragungsstange, welche das Drehmoment in die Beschläge überträgt, wenn der Handhebel in die Entriegelungsrichtung geschwenkt wird. Die Übertragung des Drehmomentes ist vorzugsweise auf einen definierten Winkelbereich begrenzt, so dass der Handhebel nur zwischen einer Ausgangsstellung und einer maximalen Auslenkung schwenkbar ist.

Die erste Funktion ist Voraussetzung für die zweite Funktion, nämlich die Missbrauchssicherung, bei welcher die Übertragung des Drehmomentes unterbrochen wird, indem der Handhebel und das eine der Beschlagteile relativ zueinander in Anschlag gebracht werden, so dass das Drehmoment das besagte Beschlagteil beaufschlägt, also wirkungslos ist. Dadurch werden die inneren Bauteile des Beschlags geschützt. Dies ist insbesondere für die Drehung in der Verriegelungsrichtung wichtig, weil dann die inneren Bauteile des Beschlags bereits ihre Endposition einnehmen und eine weitere Beaufschlagung durch die Übertragungsstange unmittelbar zu Beschädigungen führen würde. Die zweite Funktion des Anschlagmoduls als Missbrauchssicherung kann aber auch dahingehend erweitert werden, dass das Anschlagmodul auch wirksam wird, wenn der Beschlag entriegelt ist, und die Übertragungsstange weiter in die Entriegelungsrichtung gedreht wird. Das Anschlagmodul begrenzt dann den Winkelbereich für die Betätigung des Handhebels.

Eine dritte Funktion kann das Entklappern sein, indem das Anschlagmodul mittels einer Rückstellfeder in Anschlag an den Beschlag gehalten wird, was (unterhalb der Vorspannung der Rückstellfeder) eine Relativbewegung der mit dem Anschlagmodul in Wirkverbindung stehenden Übertragungsstange verhindert. Um die Rückstellfeder baulich aufzunehmen, ist das Anschlagmodul vorzugsweise topfförmig ausgebildet. Als vierte Funktion des Anschlagsmoduls kann die Definition der Endlage des Handhebels angesehen werden.

Für die in Umfangsrichtung wirksame erste Funktion sind vorzugsweise drehfeste Verbindungen zwischen Handhebel und Anschlagmodul und zwischen Anschlagmodul und Übertragungsstange vorgesehen, beispielsweise entsprechend profilierte Aufnahmen, Öffnungen, Rippen, Nuten. Für die ebenfalls in Umfangsrichtung wirksame zweite Funktion sind die Anschläge und Gegenanschläge vorzugsweise axial abstehend ausgebildet, mit entsprechenden Erstreckungen in radialer Richtung, um große Anschlagflächen in Umfangsrichtung zu bilden. Die Gegenanschläge sind vorzugsweise am zugeordneten Beschlagteil angeformt, d.h. einstückig mit diesem ausgebildet, können aber alternativ auch separat hergestellt und am Beschlagteil befestigt sein.

Für die axiale Sicherung zwischen Handhebel und Anschlagmodul sowie zwischen Anschlagmodul und den anderen Bauteilen des Beschlags können Rastnasen und Rastöffnungen und/oder Clipshaken und Ringe oder Ringwulste vorgesehen sein. Drehfeste Verbindungen und axiale Sicherungen können übergreifend zwischen unterschiedlichen Gliedern der Wirkverbindung bestehen. Beispielsweise bietet sich für das Anschlagmodul und die strangförmig profilierte Übertragungsstange an, das nächste Glied, nämlich den von der Übertragungsstange zu drehenden Mitnehmer im Inneren des Beschlags zur axialen Sicherung zu verwenden, indem dieser beispielsweise einen - vorzugsweise angeschweißten - Befestigungsring erhält.

Die Lehnenkompensationsfeder ist vorzugsweise spiralförmig ausgebildet und mit ihrem inneren Ende an einer Stützbuchse abgestützt. Vorzugsweise ist die Stützbuchse mit ihrer Stirnseite an einem der Beschlagteile mit deren Achse fluchtend angesetzt und an diesem direkt angeschweißt. Das direkte Anschweißen ist so zu verstehen, dass keine weiteren Bauteile zwischen dem betreffenden Beschlagteil und der Stützbuchse vorgesehen sind. Die direkte Verbindung wird allein durch das aufgeschmolzene Material von Beschlagteil und Stützbuchse und gegebenenfalls einen beim Schweißen hinzugefügten Zusatzwerkstoff geschaffen. Zum Abstützen kann die Lehnenkompensationsfeder mit ihrer innersten Windung an der Stützbuchse anliegen und mit ihrem Ende eingehängt sein. Die Stützbuchse weist vorzugsweise eine (kreis-)ringförmige Stirnseite auf, welche entlang ihrer Umfangs unterbrochen sein kann. Die Stützbuchse ist auch vorzugsweise hohl und an beiden Stirnseiten offen. Die Ringform der Stirnseite ermöglicht ein Laserschweißen im Inneren der Stützbuchse entlang des kreisförmigen Stoßes zwischen der Stützbuchse und dem Beschlagteil. Für ein MAG-Schweißen kann eine Stützbuchse mit einer an einer Stirnseite offenen Topfform vorteilhaft sein, wobei dann der Boden des Topfes am Beschlagteil angeschweißt wird. An der Stützbuchse können die Gegenanschläge ausgebildet sein, welche zur Begrenzung des Wiinkelbreichs der Schwenkbewegung des Handhebels und für die zweite Funktion des Anschlagmoduls vorgesehen sind.

Das erfindungsgemäße Beschlagsystem wird in Fahrzeugsitzen bevorzugt zur Einstellung der Lehnenneigung eingesetzt, kann aber auch an anderen Stellen verwendet werden. Die Ausführung des Beschlags als scheibenförmige Einheit ermöglicht beliebige Winkeländerungen zwischen den Beschlagteilen durch die relative Verdrehung um die Achse. Der axiale Zusammenhalt der Beschlagteile wird durch einen Umklammerungsring erzeugt, welcher das relativ zu ihm bewegliche, erste Beschlagteil mittels eines radial nach innen gebogenen Randes radial außen übergreift, und welcher mit dem zweiten Beschlagteil fest verbunden ist.

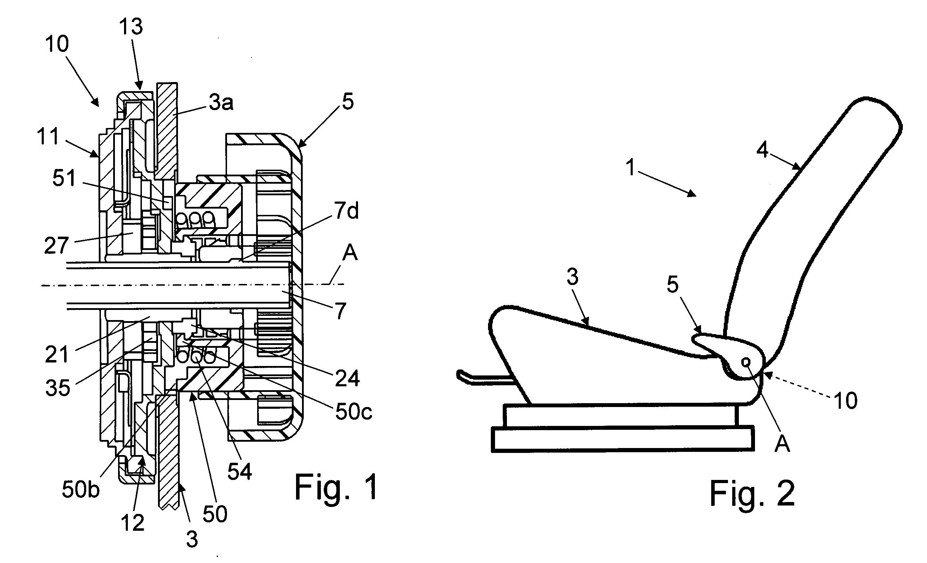

Im folgenden ist die Erfindung anhand zweier in der Zeichnung dargestellter Ausführungsbeispiele mit Varianten und Abwandlungen näher erläutert. Es zeigen
- Fig. 1: einen axialen Schnitt durch Beschlag, Anschlagmodul und Handhebel gemäß dem ersten Ausführungsbeispiel,
- Fig. 2: eine schematische Darstellung eines Fahrzeugsitzes,

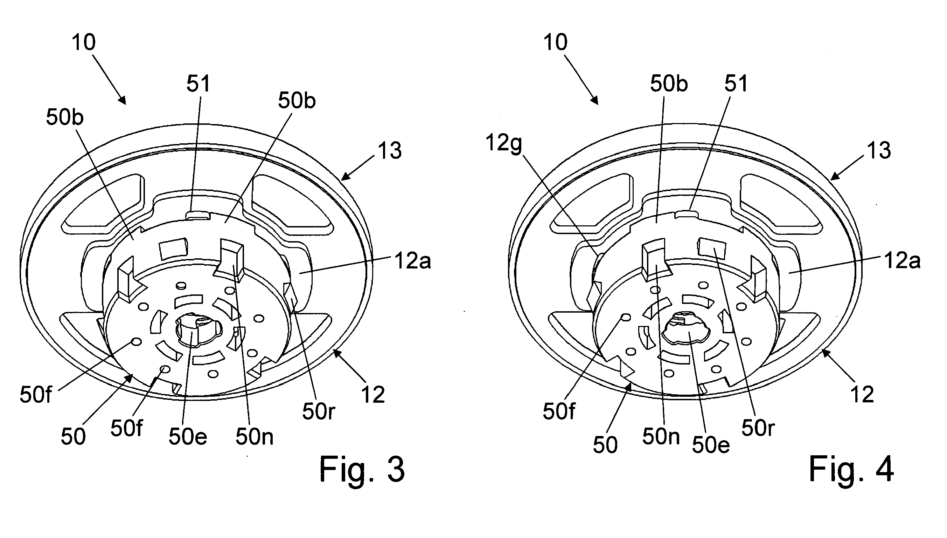

- Fig. 3: eine perspektivische Ansicht von Anschlagmodul und Beschlag im verriegelten Zustand,
- Fig. 4: eine Fig. 3 entsprechende Ansicht mit gedrehtem Anschlagmodul (entriegelter Zustand),

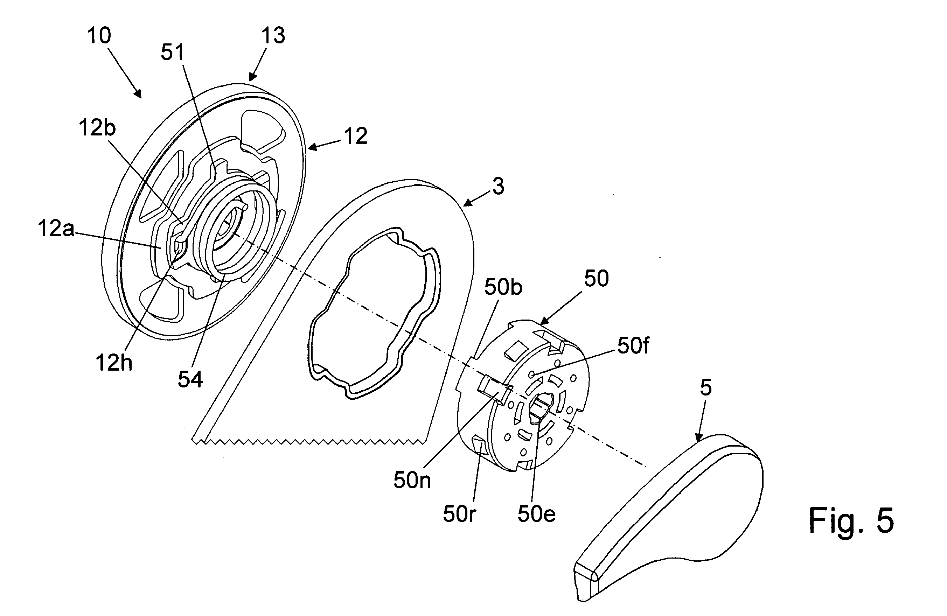

- Fig. 5: eine Explosionsdarstellung von Beschlag, Anschlagmodul, Handhebel und einem Teil des Sitzteils,

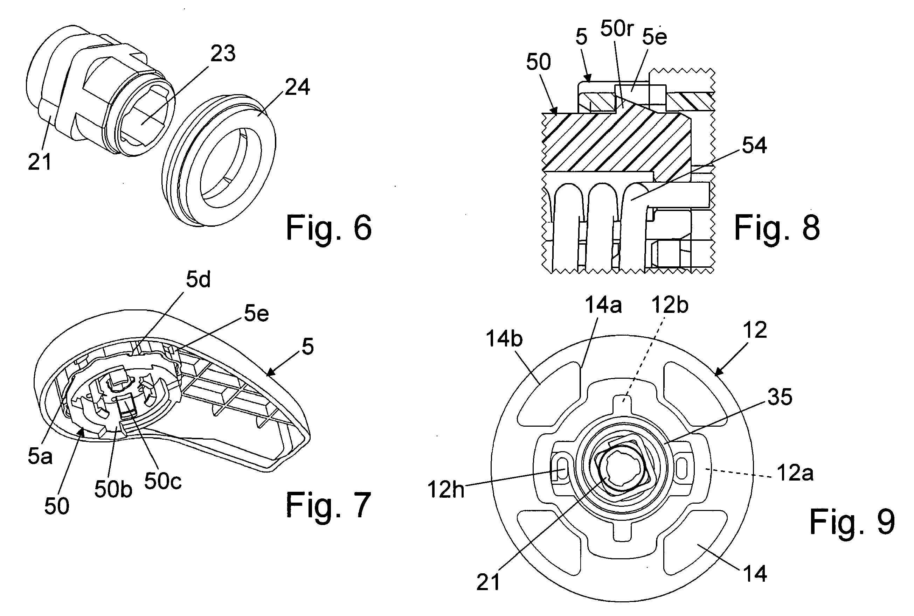

- Fig. 6: eine perspektivische Darstellung von Mitnehmer und Mitnehmerring,
- Fig. 7: eine perspektivische Darstellung von Handhebel und Anschlagmodul,
- Fig. 8: einen axialen Schnitt durch einen Teil von Handhebel und Anschlagmodul,
- Fig. 9: eine Ansicht des zweiten Beschlagteils mit Federanordnung und Mitnehmer,

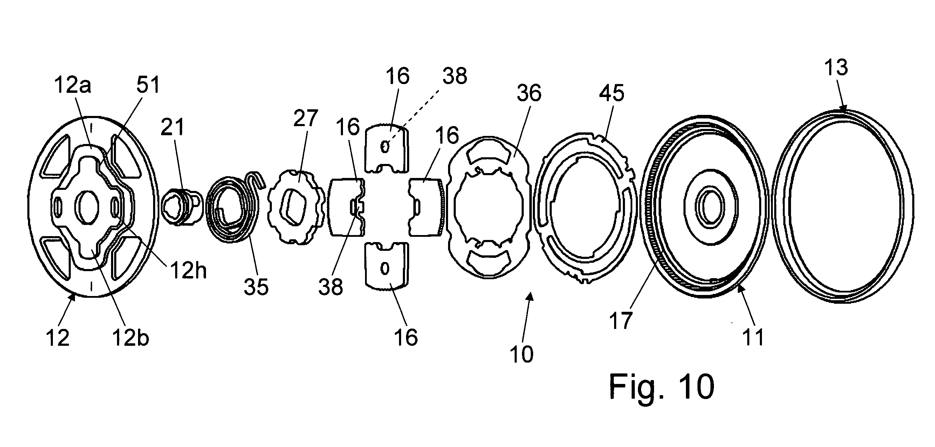

- Fig. 10: eine Explosionsdarstellung eines Beschlags,

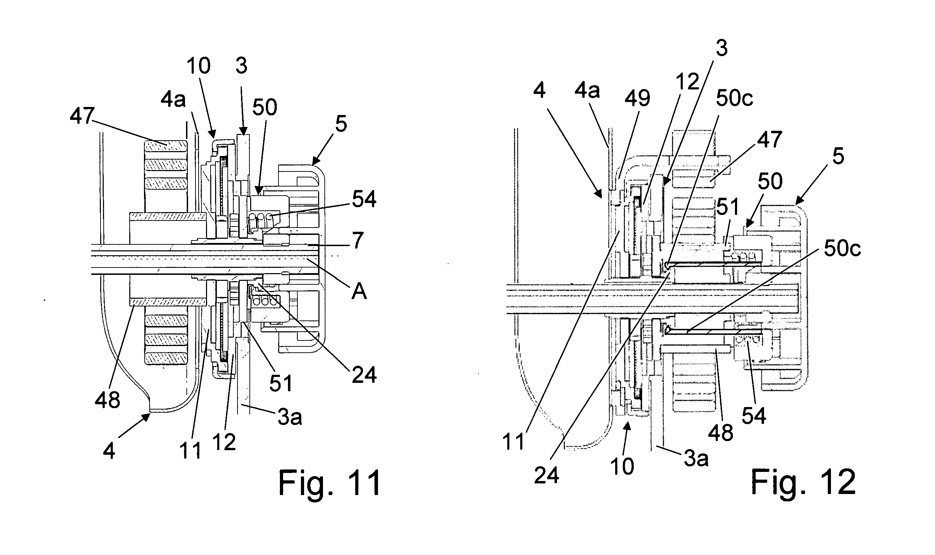

- Fig. 11: einen axialen Schnitt durch Beschlag, Anschlagmodul, Handhebel und einer gemäß einer ersten Variante abgestützten Lehnenkompensationsfeder,
- Fig. 12: einen axialen Schnitt durch Beschlag, Anschlagmodul, Handhebel und einer gemäß einer zweiten Variante abgestützten Lehnenkompensationsfeder,

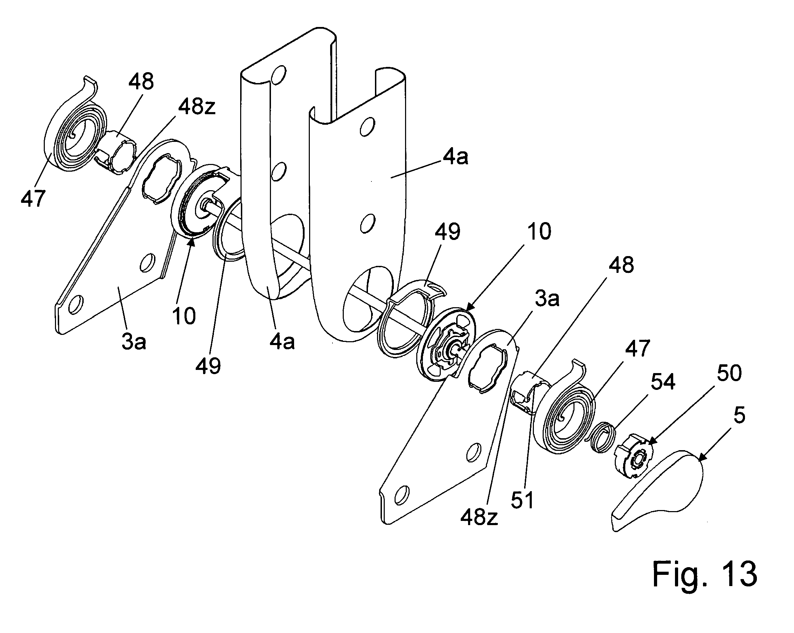

- Fig. 13: eine Explosionsdarstellung des Beschlagsystems mit Teilen der Lehne und des Sitzteils und zwei gemäß der zweiten Variante abgestützten Lehnenkompensationsfedern,

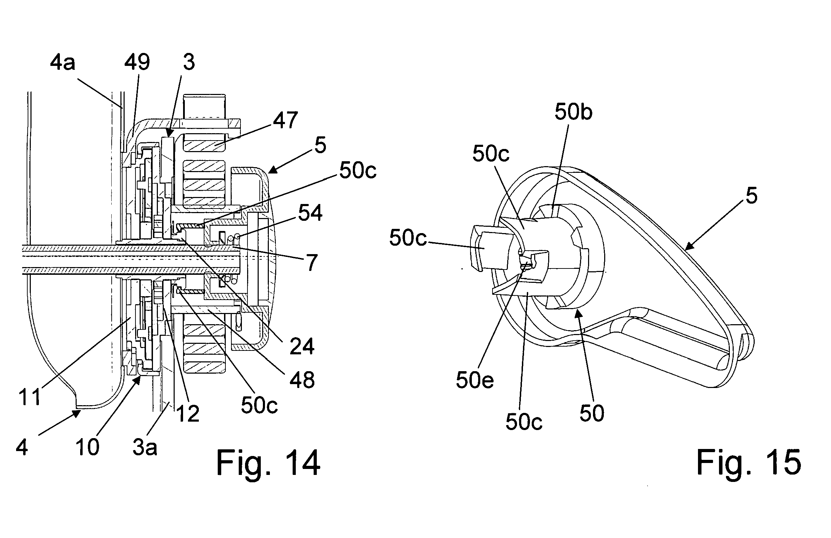

- Fig. 14: einen axialen Schnitt durch Beschlag, Lehnenkompensationsfeder und einem einstückig mit dem Anschlagmodul ausgebildeten Handhebel,
- Fig. 15: eine perspektivische Ansicht des einstückig mit dem Anschlagmodul ausgebildeten Handhebels,

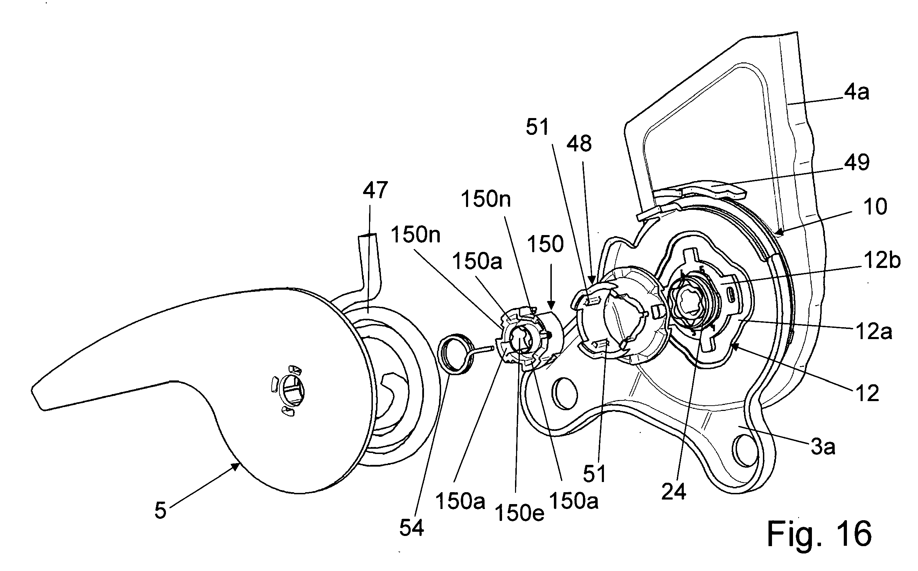

- Fig. 16: eine Explosionsdarstellung des auf der linken Fahrzeugsitzseite angeordneten Teils des Beschlagsystems gemäß dem zweiten Ausführungsbeispiel,

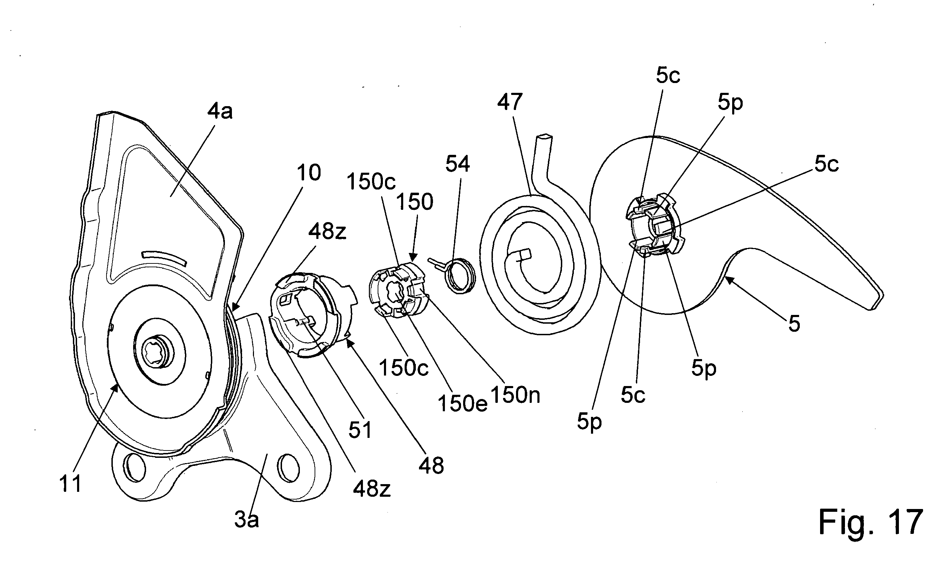

- Fig. 17: eine Explosionsdarstellung aus einer gegenüber Fig. 16 anderen Richtung,

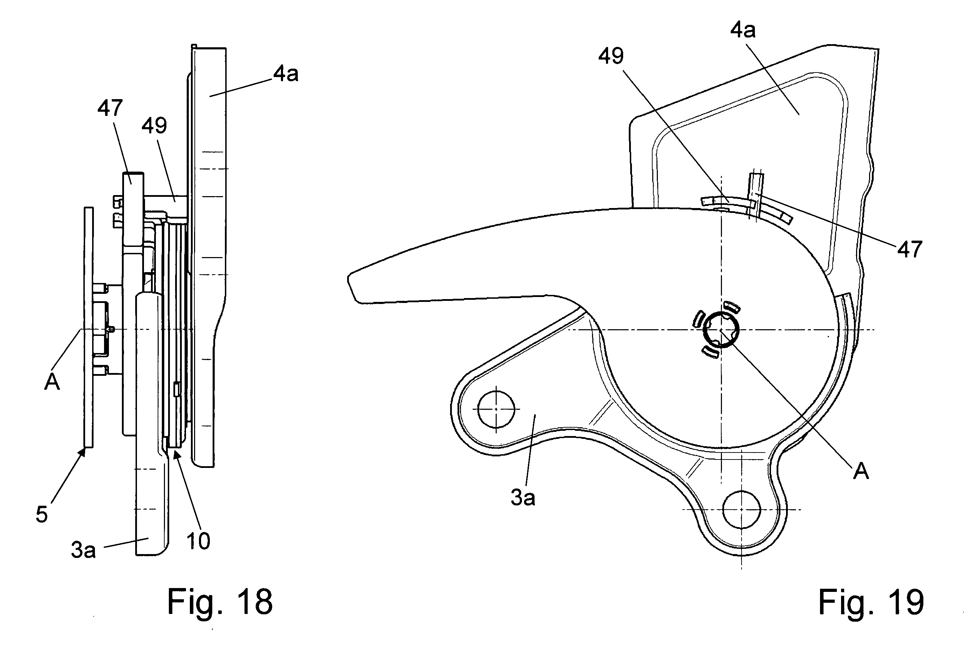

- Fig. 18: eine Fig. 16 entsprechende Rückansicht,
- Fig. 19: eine Fig. 16 entsprechende Seitenansicht,

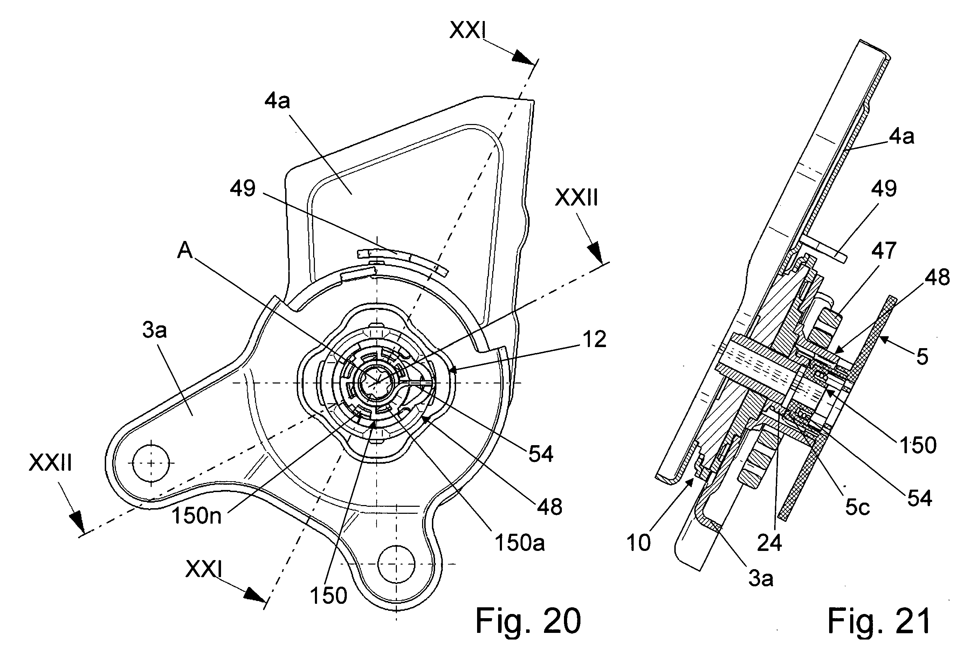

- Fig. 20: eine Fig. 19 entsprechende Seitenansicht ohne Handhebel,
- Fig. 21: einen Schnitt entlang der Linie XXI-XXI in Fig. 20 mit schematisiertem Beschlag, und

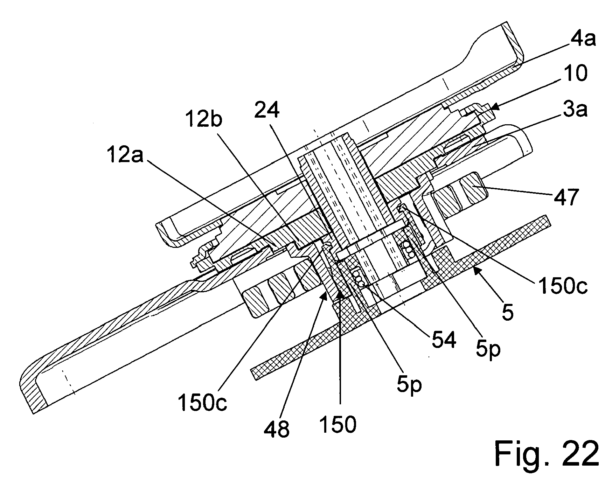

- Fig. 22: einen Schnitt entlang der Linie XXII-XXII in Fig. 20 mit schematisiertem Beschlag.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handhebels 5, eine Übertragungsstange 7 gedreht, welche horizontal im Übergangsbereich zwischen Sitzteil 3 und Lehne 4 angeordnet ist. Auf beiden Seiten des Fahrzeugsitzes 1 greift die Übertragungsstange 7 in einen Beschlag 10 ein. Die Übertragungsstange 7 definiert die verwendeten Richtungsangaben eines Zylinderkoordinatensystems.

Die beiden Beschlagteile 11 und 12 lassen sich jeweils näherungsweise in eine kreisrunde Scheibenform einbeschreiben. Die beiden Beschlagteile 11 und 12 sind auf eine später beschriebene Weise hergestellt. Zur Aufnahme der axial wirkenden Kräfte, also zum Zusammenhalt der Beschlagteile 11 und 12 ist ein Umklammerungsring 13 vorgesehen. Ein solcher Zusammenhalt mittels eines Umklammerungsrings ist beispielsweise in der US 6,799,806 B2 beschrieben. Der vorzugsweise metallische Umklammerungsring 13 ist fest mit einem der beiden Beschlagteile 11 und 12 verbunden, beispielsweise mit dem zweiten Beschlagteil 12, vorzugsweise verschweißt oder - indem er das mit ihm verbundene Beschlagteil übergreift - umgebördelt. An einer Stirnseite weist der Umklammerungsring 13 einen radial nach innen gebogenen Rand auf, mittels welchem er, gegebenenfalls unter optionaler Zwischenlage eines separaten Gleitrings, das andere der beiden Beschlagteile 11 und 12, beispielsweise das erste Beschlagteil 11, radial außen übergreift, ohne die Relativbewegung der beiden Beschlagteile 11 und 12 zu behindern. In baulicher Hinsicht bilden die beiden Beschlagteile 11 und 12 daher zusammen (mit dem Umklammerungsring 13) eine scheibenförmige Einheit.

Nach der Montage des Beschlags 10 ist das erste Beschlagteil 11 beispielsweise fest mit der Struktur der Lehne 4, vorliegend einem Lehnenteil 4a, verbunden, also lehnenfest. Das zweite Beschlagteil 12 ist dann fest mit der Struktur des Sitzteils 3, vorliegend mit einem Sitzteiladapter 3a, verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest.

Der Beschlag 10 ist als Rastbeschlag ausgebildet, bei welchem ein erstes Beschlagteil 11 und ein zweites Beschlagteil 12 miteinander verriegelbar und nach dem Entriegeln relativ zueinander um eine (mit der Übertragungsstange 7 fluchtende) Achse A verdrehbar sind, wie es beispielsweise in der DE 10 2006 015 560 B3 beschrieben ist.

Das zweite Beschlagteil 12 weist - vorliegend vier - Führungssegmente 14 auf, welche mit geraden Führungsflächen 14a paarweise jeweils einen Riegel 16 seitlich in radialer Richtung führen. Die - vorliegend insgesamt vier - Riegel 16 sind - vorliegend um je 90° - versetzt zueinander in einem zwischen den beiden Beschlagteilen 11 und 12 definierten Bauraum angeordnet. Die Riegel 16 sind an ihrem radial außen liegenden Ende mit einer Verzahnung versehen, die mit einem Zahnkranz 17 des als Hohlrad ausgebildeten ersten Beschlagteils 11 in Eingriff gelangen (einfallen) kann. Wenn der Zahnkranz 17 und die Riegel 16 zusammenwirken, ist der Beschlag 10 verriegelt. Die Führungssegmente 14 liegen mit jeweils einer gebogenen Lagerfläche 14b am Zahnkranz 17 des ersten Beschlagteils 11 an, wodurch die beiden Beschlagteile 11 und 12 einander lagern.

Alternativ ist das erste Beschlagteil 11 in einer Vertiefung des zweiten Beschlagteils 12 angeordnet und wird durch dieses radial außen übergriffen, wodurch die beiden Beschlagteile 11 und 12 einander lagern. Dabei ist der radial äußere Randbereich des ersten Beschlagteils 11 mit dem Zahnkranz 17 in radialer Richtung zwisehen den Führungssegmenten 14 und dem (der Lagerung des ersten Beschlagteils 11 dienenden) radial äußeren Randbereich des zweiten Beschlagteils 12 angeordnet. Bei hohen Belastungen, beispielsweise im Crashfall, kann das erste Beschlagteil 11 - nach einer Verformung - mit seinem Zahnkranz 17 in Anlage an die Lagerflächen 14n der in Lastrichtung näher gelegenen Führungssegmente 14 kommen. Dies erhöht die Festigkeit des Beschlags 10.

Im Zentrum des Beschlags 10 ist ein Mitnehmer 21 angeordnet, beispielsweise aus Kunststoff, welcher drehbar an wenigstens einem der beiden Beschlagteile 11 und 12, vorliegend in beiden Beschlagteilen 11 und 12, gelagert ist, genauer gesagt in einer zentralen Öffnung derselben. Auf beiden Fahrzeugsitzseiten ist der Mitnehmer 21 drehfest verbunden oder wenigstens auf Mitnahme gekoppelt mit der Übertragungsstange 7, welche in eine Bohrung 23 des hohlen Mitnehmer 21 eingeführt ist. In axialer Richtung ist der Mitnehmer 21 mittig von größerem Durchmesser als an seinen in den Beschlagteilen 11 und 12 gelagerten Enden, so dass die beiden Beschlagteile 11 und 12 den Mitnehmer 21 axial sichern. An einem Ende des Mitnehmers 21, vorliegenden demjenigen am zweiten Beschlagteil 12, ist ein Befestigungsring 24 vorgesehen, welcher vorliegend aus Kunststoff besteht und vorzugsweise mittels Ultraschallschweißens am Mitnehmer 21 befestigt ist.

Auf dem Mitnehmer 21 sitzt drehfest oder wenigstens auf Mitnahme gekoppelt ein Exzenter 27, welcher in dem zwischen den Beschlagteilen 11 und 12 definierten Bauraum angeordnet ist. Eine Federanordnung 35, vorliegend eine Spiralfeder, ist in einer zentralen Aufnahme eines der beiden Beschlagteile 11 und 12, vorliegend des zweiten Beschlagteils 12, angeordnet und vorliegend außen abgestützt. Die Federanordnung 35 beaufschlagt den Exzenter 27, vorliegend indem sie innen drehfest auf dem Mitnehmer 21 sitzt. Eine alternative Federanordnung 35 mit zwei ineinander geschachtelte Spiralfedern ist beispielsweise in der DE 10 2005 046 807 B3 beschrieben. Der von der Federanordnung 35 beaufschlagte Exzenter 27 wirkt auf die radial beweglichen Riegel 16 ein und beaufschlagt diese, so dass sie radial nach außen gedrückt werden, um in den Zahnkranz 17 einzufallen, womit der Beschlag 10 verriegelt ist.

Eine Steuerscheibe 36 ist im Bauraum axial zwischen den Riegeln 16 und dem ersten Beschlagteil 11 angeordnet und sitzt vorliegend drehfest auf dem Exzenter 27. Die Steuerscheibe 36 weist - vorliegend vier - Steuerbahnen auf, die jeweils mit einer Nase 38 jedes Riegels 16 zusammenwirken. Die Nasen 38 stehen dabei in axialer Richtung von den ihnen zugeordneten Riegeln 16 ab. Bei einer Drehung (um wenige Grad) des Mitnehmers 21 - und des damit angetriebenen Exzenters 27 und der Steuerscheibe 36 - entgegen der Kraft der Federanordnung 35 zieht die Steuerscheibe 36 die Riegel 16 radial nach innen, d.h. aus dem Zahnkranz 17, womit der Beschlag 10 entriegelt ist und die beiden Beschlagteile 11 und 12 relativ zueinander um die Achse A verdrehbar sind. Die Neigung der Lehne 4 ist dadurch zwischen mehreren, zum Sitzgebrauch geeigneten Gebrauchsstellungen einstellbar.

Bei zweitürigen Kraftfahrzeugen soll mittels Freischwenkens der Lehne 4 der Zugang zu einer hinteren Sitzreihe erleichtert werden, wofür die entriegelte Lehne 4 aus einer der Gebrauchsstellungen nach vorne in eine nicht zum Sitzgebrauch geeignete, freigeschwenkte Stellung geschwenkt wird. Es erhöht den Bedienkomfort, wenn der Handhebel 5 - oder ein weiteres Betätigungselement - nicht während des gesamten Freischwenkens gehalten werden muss und die Beschläge trotzdem erst in der freigeschwenkten Stellung verriegeln. Im Beschlag 10 ist hierfür zwischen der Steuerscheibe 36 und dem ersten Beschlagteil 11 um die Achse A herum optional ein ringförmiges Freischwenk-Steuerelement 45 vorgesehen, welches drehfest mit dem ersten Beschlagteil 11 verbunden ist. Das Freischwenk-Steuerelement 45 weist Anschlagbahnen auf, die mit den Nasen 38 der Riegel 16 zusammenwirken, indem sie deren Bewegung radial nach außen begrenzen oder diese ungehindert einfallen lassen. Um die Lehne 4 über mehr als den Winkel zwischen zwei Riegeln 16 freischwenken zu können, sind die Nasen 38 der Riegel 16 abwechselnd unterschiedlich weit radial außen oder radial innen an den ihnen zugeordneten Riegeln 16 angeordnet, so dass benachbarte Nasen 38 mit unterschiedlichen Anschlagbahnen zusammenwirken. Entsprechend sind zwei unterschiedliche Ausbildungen der Riegel 16 vorgesehen. Details sind in der DE 10 2006 015 560 B3 beschrieben.

Die beiden Beschläge 10, die Übertragungsstange 7 und der Handhebel 5 sind Teile eines Beschlagsystems, zu welchem auch wenigstens eine Lehnenkompensationsfeder 47 gehört, die an einem der beiden Beschläge 10 angeordnet ist. Es kann auch an jedem der beiden Beschläge 10 eine Lehnenkompensationsfeder 47 vorgesehen sein. Die Lehnenkompensationsfeder 47 ist aus einem Federstahlband mit näherungsweise rechteckförmigem Querschnitt hergestellt und als Spiralfeder ausgebildet.

Das innere Ende der Lehnenkompensationsfeder ist am zugeordneten Beschlag 10 abgestützt. Hierzu weist der Beschlag 10 eine Stützbuchse 48 auf, welche an einem der beiden Beschlagteile 11 oder 12 befestigt ist und mit der Achse A fluchtet. Die Stützbuchse 48 besteht vorzugsweise aus Metall, insbesondere Stahl. Die Befestigung erfolgt vorzugsweise mittels Laserschweißens. Hierzu wird die Stützbuchse 48 mit ihrer ringförmigen Stirnseite am betreffenden Beschlagteil 11 oder 12 angesetzt und dann an diesem angeschweißt. Die Lehnenkompensationsfeder 47 liegt dann mit ihrer innersten Windung auf der zylindrischen Außenseite der Stützbuchse 48 auf und ist mit ihrem Ende beispielsweise in einen Schlitz der Stützbuchse 48 eingehängt.

Das äußere Ende der Lehnenkompensationsfeder 47 ist an einem Stützelement 49 abgestützt, so dass sie aufgrund ihrer Vorspannung die Lehne 4 beaufschlagt. Das Stützelement 49 kann beispielsweise ein axial abstehender Bolzen, eine axial ausgestellten Lasche oder ein axialer Vorsprung eines Stützringes sein. Vorliegend ist das Stützelement 49 am Lehnenteil 4a befestigt, von dem es axial absteht. Die Vorspannung ist so gewählt, dass die Lehnenkompensationsfeder 47 in den möglichen Gebrauchsstellungen der Lehne 4 das Gewicht der Lehne 4 wenigstens teilweise kompensiert.

Es bestehen zwei Möglichkeiten, wo die Stützbuchse 48 am Beschlag 10 befestigt ist. Die Stützbuchse 48 kann in einer ersten Variante am ersten Beschlagteil 11 befestigt sein, welches vorliegend lehnenfest ist. Oder die Stützbuchse 48 ist in einer abgewandelten zweiten Variante am zweiten Beschlagteil 12 befestigt, welches vorliegend sitzteilfest ist. Entsprechend ist der zum Abstützen des äußeren Endes der Lehnenkompensationsfeder 47 vorgesehene Bolzen oder Stützring 49 oder dergleichen in der ersten Variante fest mit dem Sitzteil 3 verbunden, beispielsweise angeschweißt, wenn die Stützbuchse 48 am lehnenfesten ersten Beschlagteil 11 befestigt ist. In der zweiten Variante ist der zum Abstützen des äußeren Endes der Lehnenkompensationsfeder 47 vorgesehene Stützring 49 oder die sonstige Abstützung fest mit der Lehne 4 verbunden, beispielsweise angeschweißt, wenn die Stützbuchse 48 am sitzteilfesten zweiten Beschlagteil 12 befestigt ist.

Das zweite Beschlagteil 12 weist auf seiner Außenseite (also der vom ersten Beschlagteil 11 abgewandten Seite) einen ersten Sternabsatz 12a auf, dessen (vorliegend) vier Strahlen oder Arme zwischen den (vorliegend) vier Führungssegmenten 14 angeordnet sind. Auf diesem ersten Sternabsatz 12a ist ein zweiter Sternabsatz 12b von kleinerer Abmessung als der erste Sternabsatz 12a angeordnet. So ergibt sich ein terrassenartiger Aufbau, der vorliegend aufgrund des Prägens des zweiten Beschlagteils 12 ausgebildet wird. Der erste Sternabsatz 12a dient der Befestigung an der Struktur, vorliegend am sitzteilfesten Sitzteiladapter 3a, indem der erste Sternabsatz 12a in eine passende Öffnung des Sitzteiladapters 3a gesteckt und mit diesem fest verbunden, vorzugsweise laserverschweißt, ist. Der zweite Sternabsatz 12b stellt auf seiner Kehrseite im Inneren des Beschlags 10 Bauraum für die Federanordnung 35 zur Verfügung. Der zweite Sternabsatz 12b ragt durch die Öffnung hindurch und steht auf der anderen Seite der Struktur axial über. In der ersten Variante ist die Außenseite des zweiten Beschlagteils 12 von der Stützbuchse 48 und damit der Lehnenkompensationsfeder 47 abgewandt. In der zweiten Variante ist die Stützbuchse 48 am zweiten Sternabsatz 12b axial abstehend angeordnet und dort fest mit dem zweiten Beschlagteil 12 verbunden, vorzugsweise angeschweißt. Die dem zweiten Beschlagteil 12 zugewandte Stirnseite der Stützbuchse 48 kann dabei zinnenartige Vorsprünge 48z aufweisen, welche vorzugsweise formschlüssig mit dem zweiten Sternabsatz 12b zusammenwirken und so die Stützbuchse 48 vorpositionieren.

Insoweit gleichen sich die beiden Ausführungsbeispiel. Im folgenden ist das erste Ausführungsbeispiel in den verschiedenen Varianten beschrieben.

Zwischen dem Handhebel 5 und dem ihm benachbarten Beschlag 10, also nur auf einer Fahrzeugsitzseite, ist ein Anschlagmodul 50 vorgesehen. Das Anschlagmodul 50 ist topfförmig ausgebildet, vorzugsweise als Kunststoff-Spritzguss-Teil. Das Anschlagmodul 50 ist mit seiner offenen Seite dem zweiten Beschlagteil 12 zugewandt und fluchtet mit der Achse A. An der offenen Seite des Anschlagmoduls 50 ist der Rand der zylindrischen Wand des Anschlagmoduls 50 wie eine Krone ausgebildet, indem entlang des Randes mehrere, vorliegend vier, angeformte (d.h. einstückig mit dem Anschlagmodul 50 ausgebildet) Anschläge 50b axial abstehen. Aus dem Inneren des Anschlagmoduls 50 ragen mehrere, vorliegend sechs, Clipshaken 50c axial hervor, welche konzentrisch zu den Anschlägen 50b angeordnet sind. Die Clipshaken 50c hintergreifen den Befestigungsring 24 am Mitnehmer 21 in axialer Richtung unter Bildung einer Clipsverbindung, wodurch das Anschlagmodul 50 mit dem Beschlag 10 (auf dessen Außenseite) drehbar verbunden ist.

In der ersten Variante, d.h. wenn die Stützbuchse 48 am ersten Beschlagteil 11 befestigt ist, definieren die vier Strahlen oder Arme des zweiten Sternabsatzes 12b definieren vier Gegenanschläge 51, die in Umfangsrichtung zum Zusammenwirken mit den Anschlägen 50b des Anschlagmoduls 50 geeignet sind. Um radial möglichst große Gegenanschläge 51 zu schaffen, ist die Federanordnung 35 entsprechend kompakt gewickelt. In der zweiten Variante, d.h. wenn die Stützbuchse 48 am zweiten Beschlagteil 12 befestigt ist, weist die freie, ringförmige Stirnfläche der Stützbuchse 48 vier axiale Vorsprünge auf, welche die vier Gegenanschläge 51 definieren, die in Umfangsrichtung zum Zusammenwirken mit den Anschlägen 50b des Anschlagmoduls 50 geeignet sind.

Wenn das Anschlagmodul 50 mit dem Mitnehmer 21 verbunden, also vorliegend verclipst, ist, sind die vier Anschläge 50b mit viel Spiel in Umfangsrichtung, beispielsweise 30°, zwischen den Gegenanschlägen 51 angeordnet. Vorzugsweise liegen die Anschläge 50b mit ihren axialen Stirnseiten am ersten Sternabsatz 12a (bzw. der freien Stirnseite der Stützbuchse 48) an.

Im Inneren des Anschlagmoduls 50, in radialer Richtung zwischen dem Rand mit den Anschlägen 50b und den Clipshaken 50c, ist eine Rückstellfeder 54 angeordnet. Die Rückstellfeder 54 ist vorzugsweise aus Federdraht schraubenförmig gewickelt. Die beiden Federenden sind umgebogen und stehen (entgegengesetzt) axial ab. Das zweite Beschlagteil 12 weist an einem, vorzugsweise an zwei gegenüberliegenden Strahlen oder Armen des zweiten Sternabsatzes 12b einen Halter 12h auf, welcher als ein in den Bauraum im Inneren des Beschlags 10 ragenden Zapfen ausgebildet ist, der auf seiner Kehrseite ein nach außen offenes Sackloch aufweist. Das Sackloch kann herstellungsbedingt bei der Ausbildung des Zapfens entstehen. Im Inneren des Beschlags 10 dient der Halter 12h zur Befestigung der Federanordnung 35. Auf der Außenseite des zweiten Beschlagsteil 12 dient der Halter 12h der Einhängung (also Befestigung) des einen der beiden Federenden der Rückstellfeder 54.

Im Boden des Anschlagmoduls 50, also seiner (weitgehend) geschlossenen Stirnseite, ist eine zentrale Öffnung 50e vorgesehen. die in axialer Richtung durchgängig ausgebildet und die konzentrisch zur zylindrischen Wand mit den Anschlägen 50b und zu den Clipshaken 50c angeordnet ist. Die profilierte zentrale Öffnung 50e nimmt die Übertragungsstange 7 drehfest auf. Konzentrisch zur zentralen Öffnung 50e sind mehrere, vorliegend acht, in Umfangsrichtung gleichmäßig verteilte Federeinhängungen 50f angeordnet, die axial durchgängig im Boden des Anschlagmoduls 50 ausgebildet sind. In einer dieser Federeinhängungen 50f ist das andere der beiden Federenden der Rückstellfeder 54 gesteckt (und damit befestigt).

In der zylindrischen Wand des Anschlagmoduls 50 sind mehrere, vorliegend vier, Nuten 50n ausgebildet, welche in axialer Richtung verlaufen und an einem Ende am Boden des Anschlagmoduls 50 münden. Vorliegend fluchten die Nuten 50n mit den Anschlägen 50b. In Umfangsrichtung zwischen den Nuten 50n sind an der zylindrischen Wand des Anschlagmoduls 50 mehrere, vorliegend vier, Rastnasen 50r ausgebildet. Die Rastnasen 50r weisen eine vom Boden des Anschlagmoduls 50 her ansteigende Flanke und daran anschließend eine radial nach innen springende Flanke auf.

Der Handhebel 5 besteht vorzugsweise aus Kunststoff und ist vorzugsweise als einstückiges Bauteil ausgebildet. Der Handhebel 5 weist (als Teilbereich) eine Aufnahme 5a auf, in welche das Anschlagmodul 50 beim Aufstecken des Handhebels 5 (in axialer Richtung) eingeführt wird. Die Aufnahme 5a nimmt dann den größten Teil des Anschlagmoduls 50 auf. Die Aufnahme 5a wird begrenzt von einer Wand, an welcher mehrere, vorliegend vier, Rippen 5d ausgebildet sind, die in axialer Richtung verlaufen. Die Rippen 5d werden beim Aufstecken des Handhebels 5 auf das Anschlagmodul 50 (formschlüssig) in die Nuten 50n eingeführt. Der Handhebel 5 und das Anschlagmodul 50 sind dadurch in Umfangsrichtung drehfest miteinander verbunden, so dass eine Übertragung von Drehmomenten möglich ist. Optional sind (weitere) axiale Vorsprünge am Handhebel 5 und Vertiefungen am Anschlagmodul 50 ausgebildet, beispielsweise radial zwischen der zentralen Öffnung 50e und den Federeinhängungen 50f, welche zusätzlich einen Formschluss zwischen dem Handhebel 5 und dem Anschlagmodul 50 schaffen.

In der Wand der Aufnahme 50a sind ferner mehrere, vorliegend vier, Rastöffnungen 5e - in radial Richtung durchgängig - ausgebildet. Beim Aufstecken des Handhebels 5 auf das Anschlagmodul 50 gelangen die Rastnasen 50r in die Rastöffnungen 5e unter Bildung einer Clipsverbindung, d.h. der in der Richtung des Aufsteckens voreilende Rand jeder Rastöffnung 5e hintergreift die zugeordnete Rastnase 50r. Der Handhebel 5 ist dadurch in axialer Richtung am Anschlagmodul 50 gesichert. Die Elastizität des Anschlagmoduls 50 und des Handhebels 5 reichen aus, damit die Rastnasen 50r den Weg zwischen dem stirnseitigen Rand der Wand der Aufnahme 5a und der Rastöffnung 50r zurücklegen können.

Die Übertragungsstange 7 weist vorzugsweise Klemmnocken 7d auf, die radial geringfügig abstehen und beispielsweise durch eine lokale Verformung (Quetschen) der Übertragungsstange 7 ausgebildet werden. Die Klemmnocken 7d wirken mit dem Rand der zentralen Öffnung 50e des Anschlagmoduls 50 zusammen, indem sie die Übertragungsstange 7 - zusätzlich zur drehfesten Verbindung in Umfangsrichtung - in axialer Richtung am Anschlagmodul 50 festklemmen, d.h. reibschlüssig (und geringfügig formschlüssig) axial sichern. Die Übertragungsstange 7 ist dann gegen ein Verschieben in den Beschlag 10, d.h. in den Mitnehmer 21, hinein gesichert. Das Verschieben der Übertragungsstange 7 aus dem Beschlag 10 heraus verhindert auch der Handhebel 5, an den die Übertragungsstange 7 in axialer Richtung in Anlage gelangt.

Das Anschlagmodul 50 steht also in Wirkverbindung einerseits mit dem Handhebel 5 und andererseits der Übertragungsstange 7, und zwar in der Regel in Serie zwischen diesen beiden Bauteile gelegen. Das Anschlagmodul 50 bewirkt dann als eine erste Funktion die Übertragung des Drehmoments des betätigten Handhebels 5 auf die Übertragungsstange 7 (welche das Drehmoment in die Mitnehmer 21 der beiden Beschläge 10 überträgt), wenn der Handhebel 5 in die Entriegelungsrichtung geschwenkt wird. Das Schwenken des Handhebels 5 erfolgt gegen die Kraft der Rückstellfeder 54 und wird begrenzt durch die Anlage der Anschläge 50b an die in Entriegelungsrichtung gelegenen Gegenanschläge 51.

Sofern die zyklische Symmetrie des Anschlagmoduls 50, also insbesondere der Nuten 50n (und entsprechend der Rippen 5d des Handhebels 5), und die zyklische Symmetrie der Übertragungsstange 7 (und entsprechend der zentralen Öffnung 50e) teilerfremd sind, besteht vorzugsweise in Umfangsrichtung keine direkte Verbindung zwischen dem Handhebel 5 und der Übertragungsstange 7, um das Aufstecken des Handhebels 5 nicht auf eine einzige Möglichkeit in Umfangsrichtung einzuschränken. Falls aber genau dies gewünscht ist, kann auch der Handhebel 5 eine profilierte Aufnahme für die Übertragungsstange 7 aufweisen. Das Anschlagmodul 50 wäre dann bezüglich der Wirkverbindung und der damit verbundenen Funktion der Übertragung des Drehmoments parallel statt in Serie zwischen dem Handhebel 5 und der Übertragungsstange 7.

Das Anschlagmodul 50 bringt in wenigstens eine Drehrichtung den Handhebel 5 und den Beschlag 10 relativ zueinander in Anschlag. Als zweite Funktion dient das Anschlagmodul 50 als Missbrauchssicherung. Wird bei verriegelten Beschlägen 10 versucht, den Handhebel 5 entgegen der Entriegelungsrichtung zu schwenken, also in die Verriegelungsrichtung, so verhindert die Anlage der Anschläge 50b an die Gegenanschläge 51, dass sich das Anschlagmodul 50 - und damit auch die Übertragungsstange 7 - dreht.

Als optionale dritte Funktion erfüllt das Anschlagmodul 50 eine Entklapperungsfunktion. Im verriegelten Zustand der beiden Beschläge 10 wird mittels der Rückstellfeder 54 das Anschlagmodul 50 mit seinen Anschlägen 50b in Anlage an die in Verriegelungsrichtung gelegenen Gegenanschläge 51 des zweiten Beschlagteils 12 gehalten. Damit wird die Übertragungsstange 7 bis zu einer der Vorspannung der Rückstellfeder 54 entsprechenden Kraft festgehalten, was ein Klappern wenigstens bei leichten Erschütterungen verhindert. Soll die Übertragungsstange 7 auch für größere Erschütterungen entklappert bleiben, ist die Rückstellfeder 54 entsprechend stark zu wählen und vorzuspannen. Das Anschlagmodul 50 mit der Rückstellfeder 54 bringt den Handhebel 5 in eine definierte Endlage, was als vierte Funktion gesehen werden kann. Ferner kann die Rückstellfeder 54 auch zur Massenkompensation des Handhebels 5 im Crashfall dienen, so dass die Massenträgheit des Handhebels 5 nicht zum Entriegeln des Beschlags 10 führt.

In einer abgewandelten Ausführung, welche mit beiden Varianten der Befestigung der Stützbuchse 48 für die Lehnenkompensationsfeder 47 kompatibel ist, sind der Handhebel 5 und das Anschlagmodul 50 einstückig miteinander ausgebildet. Entsprechend entfallen die Aufnahme 5a, die Rippen 5d und die Nuten 5n sowie die Rastöffnung 5e und die Rastnasen 50r.

Im folgenden ist das zweite Ausführungsbeispiel beschrieben. Gleiche Bezugszeichen wie im ersten Ausführungsbeispiel bezeichnen gleiche oder gleichwirkende Bauteile

Zwischen dem Handhebel 5 und dem ihm benachbarten Beschlag 10, also nur auf einer Fahrzeugsitzseite, ist innerhalb der Stützbuchse 48 ein Anschlagmodul 150 angeordnet, welches vorzugsweise aus Kunststoff besteht und welches vorzugsweise eine näherungsweise hohlzylindrische Grundform aufweist. Das Anschlagmodul 150 weist auf seiner Außenumfangsseite radial gestufte Nuten 150n auf, welche in der inneren Stufe Clipshaken 5c des Handhebels 5 führen. Die Wände der äußeren Stufe der Nuten 150n dienen als Anschläge 150b des Anschlagmoduls 150. Die Stützbuchse 48 weist auf ihrer Innenumfangsseite Rippen auf, welche in Umfangsrichtung versetzt zueinander angeordnet sind und jeweils in axialer Richtung verlaufen. Die Rippen dienen als Gegenanschläge 51. In der äußeren Stufe nehmen die Nuten 150n - in Umfangsrichtung beabstandet - die Gegenanschläge 51 auf. Der Abstand zwischen den Anschlägen 150b und den Gegenanschlägen 51 definiert den Winkelbereich, innerhalb dessen das Anschlagmodul 150 relativ zur Stützbuchse 48 gedreht werden kann.

Der Handhebel 5 besteht vorzugsweise aus Kunststoff und ist vorzugsweise als einstückiges Bauteil ausgebildet. Außer den Clipshaken 5c weist der Handhebel 5 noch parallel dazu axial abstehende Vorsprünge 5p auf, von denen wenigstens einige formschlüssig in passende Aufnahmen 150a des Anschlagmoduls 150 greifen und einige an der Innenwand der Stützbuchse 48 anliegen. Die Vorsprünge 5p dienen der Einleitung eines antreibenden Drehmomentes in das Anschlagmodul 150. Axial zwischen dem Anschlagmodul 150 und dem Handhebel 5 ist in einer Vertiefung des Anschlagmoduls 150 eine Rückstellfeder 54 angeordnet, welche zwei radial abstehende Schenkel aufweist. Ein kürzerer Schenkel liegt in einer Einkerbung des Anschlagmoduls 150, während ein längerer Schenkel radial über das Anschlagmodul 150 übersteht und in einer Einkerbung der Stützbuchse 48 liegt. Zu den Clipshaken 5c des Handhebels 5 in Umfangsrichtung versetzt weist das Anschlagmodul 150 zusätzliche Clipshaken 150c auf. Das Anschlagmodul 150 ist mittels seiner Clipshaken 150c am Befestigungsring 24 des Mitnehmers 21 festgeclipst, und zwar axial gesichert und in Umfangsrichtung relativ zum Mitnehmer 21 drehbar. Der Handhebel 5 ist mittels seiner Clipshaken 5c am Anschlagmodul 150 oder ebenfalls am Befestigungsring 24 (drehbar) festgeclipst. Durch das Festclipsen des Handhebels 5 ist die Rückstellfeder 54 verliersicher eingeschlossen, so dass nur der mit der Stützbuchse 48 zusammenwirkende Schenkel herausragt.

Die profilierte Übertragungsstange 7 greift formschlüssig in eine passend profilierte zentrale Öffnung 150e des Anschlagmoduls 150 und ist mit dem Mitnehmer 21 auf Mitnahme gekoppelt. Eine axiale Sicherung der Übertragungsstange 7 kann durch radial geringfügig abstehende Klemmnocken erfolgen, welche beispielsweise durch eine lokale Verformung (Quetschen) der Übertragungsstange 7 ausgebildet werden und reibschlüssig (und geringfügig formschlüssig) mit der Wand der zentralen Öffnung 150e (und gegebenenfalls der Bohrung 23) zusammenwirken.

Das Anschlagmodul 150 steht also in Wirkverbindung einerseits mit dem Handhebel 5 und andererseits mit der Übertragungsstange 7, und ist (bezüglich der Drehmomentenübertragung) in Serie zwischen diesen beiden Bauteile gelegen. Das Anschlagmodul 150 bewirkt dann als eine erste Funktion die (winkelbegrenzte) Übertragung des Drehmoments des betätigten Handhebels 5 auf die Übertragungsstange 7 (welche das Drehmoment in die Mitnehmer 21 der beiden Beschläge 10 überträgt), wenn der Handhebel 5 in die Entriegelungsrichtung geschwenkt wird. Die Schwenkbewegung des Handhebels 5 erfolgt gegen die Kraft der Rückstellfeder 54 und wird begrenzt mittels der Anlage der Anschläge 150b, d.h. der in Entriegelungsrichtung voreilenden Wände der Nuten 150n, an die weiter in Entriegelungsrichtung gelegenen Gegenanschläge 51 der Stützbuchse 48.

Das Anschlagmodul 150 bewirkt eine spielfreie und missbrauchsgesicherte Positionierung des Handhebels 5 in seiner Ausgangsstellung, indem die Rückstellfeder 54 das Anschlagmodul 150 entgegen der Entriegelungsrichtung, also in die Verriegelungsrichtung, mit seinen Anschlägen 150b, d.h. den in Entriegelungsrichtung nacheilenden Wänden der Nuten 150n, in Anlage an die in Verriegelungsrichtung gelegenen Gegenanschläge 51 der Stützbuchse 48 bringt und dort hält. Als zweite Funktion dient das Anschlagmodul 150 als Missbrauchssicherung. Die besagte Anlage der Anschläge 150b an die Gegenaschläge 51 verhindert, dass die Übertragungsstange 7 aus der Ausgangsstellung heraus manuell weiter in die Verriegelungsrichtung gedreht werden kann. Als dritte Funktion erfüllt das Anschlagmodul 150 eine Entklapperungsfunktion. Die Vorspannung der Rückstellfeder 54 stellt das Anschlagmodul 150 spielfrei, verhindert als unkontrollierte Relativbewegungen mit Geräuschbildung

Entsprechend hat die Stützbuchse 48 - außer der Abstützung der Lehnenkompensationsfeder 47 - die Funktion, die Schwenkbewegung des Handhebels 5 zu begrenzen und die spielfreie und missbrauchsgesicherte Positionierung des Handhebels 5 in seiner Ausgangsstellung zu gewährleisten.

### Bezugszeichenliste

- 1: Fahrzeugsitz
- 3: Sitzteil
- 3a: Sitzteiladapter
- 4: Lehne
- 4a: Lehnenteil
- 5: Handhebel
- 5a: Aufnahme
- 5c: Clipshaken
- 5d: Rippe
- 5e: Rastöffnung
- 5p: Vorsprung
- 7: Übertragungsstange
- 7d: Klemmnocken
- 10: Beschlag
- 11: erstes Beschlagteil
- 12: zweites Beschlagteil
- 12a: erster Sternabsatz
- 12b: zweiter Sternabsatz
- 12h: Halter
- 13: Umklammerungsring
- 14: Führungssegment
- 14a: Führungsfläche
- 14b: Lagerfläche
- 16: Riegel
- 17: Zahnkranz
- 21: Mitnehmer
- 23: Bohrung
- 24: Befestigungsring
- 27: Exzenter
- 35: Federanordnung
- 36: Steuerscheibe
- 38: Nase
- 45: Freischwenk-Steuerelement
- 47: Lehnenkompensationsfeder
- 48: Stützbuchse
- 48z: zinnenartiger Vorsprung
- 49: Stützring
- 50, 150: Anschlagmodul
- 50b, 150b: Anschlag
- 50c, 150c: Clipshaken
- 50e, 150e: zentrale Öffnung
- 50f: Federeinhängung
- 50n, 150n: Nut
- 50r: Rastnase
- 51: Gegenanschlag
- 54: Rückstellfeder
- 150a: Aufnahme
- A: Achse

## Patentansprüche

1. Beschlagsystem für einen Fahrzeugsitz, insbesondere einen Kraftfahrzeugsitz, mit wenigstens einem Beschlag (10), welcher ein erstes Beschlagteil (11) und ein zweites Beschlagteil (12) aufweist, die miteinander verriegelbar und relativ zueinander um eine Achse (A) verdrehbar sind, einer Übertragungstange (7), deren Drehung den Beschlag (10) entriegelt, und einem Handhebel (5), dessen Betätigung zum Entriegeln des Beschlags (10) die Übertragungsstange (7) dreht, wobei ein Anschlagmodul (50; 150) vorgesehen ist, welches in Wirkverbindung einerseits mit dem Handhebel (5) und andererseits mit der Übertragungsstange (7) steht und welches in wenigstens eine Drehrichtung den Handhebel (5) und eines der Beschlagteile (11, 12) relativ zueinander in Anschlag bringt, wobei das Anschlagmodul (50; 150) wenigstens einen Anschlag (50b; 150b) und das eine der Beschlagteile (1 1, 12) oder ein an einem der Beschlagteile (11, 12) befestigtes Teil (48) wenigstens einen Gegenanschlag (51) aufweist, welche in Umfangsrichtung der Achse (A) zusammenwirken und insbesondere den Winkelbereich definieren, innerhalb dessen das Anschlagmodul (50; 150) relativ zu dem einen Beschlagteil (1 1, 12) drehbar ist.

2. Beschlagsystem nach Anspruch 1, **dadurch gekennzeichnet, dass** eine Rückstellfeder (54) vorgesehen ist, welche in eine Drehrichtung den Anschlag (50b; 150b) und den Gegenanschlag (51) zusammenwirken lässt und welche gegebenenfalls das Anschlagmodul (50; 150) in eine Ausgangsstellung dreht, wobei die Rückstellfeder (54) insbesondere einerseits in einer Federeinhängung (50f) des Anschlagmoduls (50) und andererseits an einem Halter (12h) des einen der Beschlagteile (11, 12) befestigt ist.

3. Beschlagsystem nach einem der vorhergehenden Ansprüche, **dadurch gekennzeichnet, dass** das Anschlagmodul (50; 150) topfförmig oder hohlzylindrisch ausgebildet ist, insbesondere als Kunststoff-Spritzguss-Teil.

4. Beschlagsystem nach einem der vorhergehenden Ansprüche, **dadurch gekennzeichnet, dass** das Anschlagmodul (50; 150) und die Übertragungsstange drehfest miteinander verbunden sind, insbesondere indem die profilierte Übertragungsstange (7) formschlüssig in eine passende zentrale Öffnung (50e; 150e) des Anschlagmoduls (50; 150) greift.

5. Beschlagsystem nach einem der vorhergehenden Ansprüche, **dadurch gekennzeichnet, dass** der Handhebel (5) und das Anschlagmodul (50; 150) drehfest miteinander verbunden sind, insbesondere mittels wenigstens einer in axialer Richtung verlaufenden Rippe (5d) und wenigstens einer die Rippe (5d) aufnehmenden Nut (50n) oder mittels anderer Vorsprünge (5p) und Aufnahmen (150a) und/oder mittels Clipshaken (5c) und Nuten (150n).

6. Beschlagsystem nach einem der vorhergehenden Ansprüche, **dadurch gekennzeichnet, dass** für eine axiale Sicherung zwischen dem Handhebel (5) und dem Anschlagmodul (50) wenigstens eine in radialer Richtung weisende Rastnase (50r) oder Clipshaken (5c) und wenigstens eine die Rastnase (50r) aufnehmende Rastöffnung (5e) oder den Clipshaken (5c) aufnehmende Nut (150n) vorgesehen ist, oder dass der Handhebel (5) und das Anschlagmodul (50) einstückig miteinander ausgebildet sind.

7. Beschlagsystem nach einem der vorhergehenden Ansprüche, **dadurch gekennzeichnet, dass** für eine axiale Sicherung zwischen dem Anschlagmodul (50) und einem Mitnehmer (21) des Beschlags (10) wenigstens ein Befestigungsring (24), welchen insbesondere ein Clipshaken (50c) hintergreift.

8. Beschlagsystem nach einem der vorhergehenden Ansprüche, **gekennzeichnet durch** einen am ersten Beschlagteil (11) ausgebildeten Zahnkranz (17), einem um die Achse (A) drehbar gelagerten Exzenter (27), welcher von einem von der Übertragungsstange (7) drehbaren Mitnehmer (21) beaufschlagbar ist, und mehreren Riegeln (16), welche vom zweiten Beschlagteil (12) mittels Führungssegmenten (14) in bezüglich der Achse (A) radialer Richtung geführt, vom Exzenter (27) beaufschlagt radial nach außen bewegbar sind und welche zum Verriegeln des Beschlags (10) mittels einer Verzahnung radial außen mit dem Zahnkranz (17) des ersten Beschlagteils (11) zusammenwirken.

9. Beschlagsystem nach einem der vorhergehenden Ansprüche, **gekennzeichnet durch** eine spiralförmig ausgebildete Lehnenkompensationsfeder (47), welche mit ihrem inneren Ende an einer Stützbuchse (48) abgestützt ist.

10. Beschlagsystem nach Anspruch 9, **dadurch gekennzeichnet, dass** die Stützbuchse (48) mit ihrer Stirnseite an einem der Beschlagteile (11, 12) befestigt ist, insbesondere mittels Laserschweißens angeschweißt ist.

11. Beschlagsystem nach Anspruch 1 und 10, **dadurch gekennzeichnet, dass** die Stützbuchse (48) den wenigstens einen Gegenanschlag (51) aufweist.

12. Beschlagsystem nach Anspruche 11, **dadurch gekennzeichnet, dass** das Anschlagmodul (150) innerhalb derStützbuchse (48) drehbar gelagert ist, wobei der wenigstens eine Anschlag (150b) an der Außenumfangsseite des Anschlagmoduls (150) und der wenigstens eine Gegenanschlag (51) an der Innenumfangsseite der Stützbuchse (48) ausgebildet ist.

13. Fahrzeugsitz (1) mit einem Sitzteil (3) und einer Lehne (4), welche mittels eines Beschlagsystems (5, 7, 10, 47, 50; 150) nach einem der vorhergehenden Ansprüche am Sitzteil (3) angebracht, relativ zu diesem schwenkbar und mit unterschiedlichen Neigungseinstellungen verriegelbar ist.

## Claims

1. Recliner system for a vehicle seat, in particular a motor vehicle seat, having at least one recliner (10), which has a first recliner part (11) and a second recliner part (12), which can be locked to one another and can be rotated relative to one another about an axis (A), a transmission rod (7), the rotation of which unlocks the recliner (10), and a hand lever (5), the actuation of which rotates the transmission rod (7) in order to unlock the recliner (10), wherein a stop module (50; 150) is provided, which is operatively connected to the hand lever (5), on the one hand, and to the transmission rod (7), on the other hand, and which brings the hand lever (5) and one of the recliner parts (11, 12) into stop contact relative to one another in at least one direction of rotation, wherein the stop module (50; 150) has at least one stop (50b; 150b), and one of the recliner parts (11, 12) or a part (48) fixed on one of the recliner parts (11, 12) has at least one counterstop (51), which interact in the circumferential direction of the axis (A) and, in particular, define the angular range within which the stop module (50; 150) can be rotated relative to said one recliner part (11, 12).

2. Recliner system according to Claim 1, **characterized in that** a return spring (54) is provided, causing the stop (50b; 150b) and the counterstop (51) to interact in one direction of rotation and, if required, rotating the stop module (50; 150) into an initial position, wherein the return spring (54) is, in particular, fixed in a spring anchorage point (50f) of the stop module (50), on the one hand, and on a holder (12h) of said one of the recliner parts (11, 12), on the other hand.

3. Recliner system according to either of the preceding claims, **characterized in that** the stop module (50; 150) is of cup-shaped or hollow-cylindrical design, in particular is designed as a plastic injection molding.

4. Recliner system according to one of the preceding claims, **characterized in that** the stop module (50; 150) and the transmission rod are connected to one another in a torsionally rigid manner, in particular by virtue of the fact that the profiled transmission rod (7) engages positively in a matching central opening (50e; 150e) of the stop module (50; 150).

5. Recliner system according to one of the preceding claims, **characterized in that** the hand lever (5) and the stop module (50; 150) are connected to one another in a torsionally rigid manner, in particular by means of at least one rib (5d) extending in the axial direction and at least one groove (50n) receiving the rib (5d) or by means of other projections (5p) and receptacles (150a) and/or by means of clip hooks (5c) and grooves (150n).

6. Recliner system according to one of the preceding claims, **characterized in that** at least one latching nose (50r) or clip hook (5c) pointing in the radial direction and at least one latching opening (5e) receiving the latching nose (50r) or at least one groove (150n) receiving the clip hook (5c) is provided for axial retention between the hand lever (5) and the stop module (50), or **in that** the hand lever (5) and the stop module (50) are formed integrally with one another.

7. Recliner system according to one of the preceding claims, **characterized in that** at least one fastening ring (24), behind which, in particular, a clip hook (50c) engages for axial retention between the stop module (50) and a driver (21) of the recliner (10).

8. Recliner system according to one of the preceding claims, **characterized by** a toothed rim (17) formed on the first recliner part (11), an eccentric (27), which is supported in such a way as to be rotatable about the axis (A) and which can be subjected to a load by a driver (21) that can be rotated by the transmission rod (7), and a plurality of locking elements (16), which, with guidance by the second recliner part (12), by means of guide segments (14), in a direction radial with respect to the axis (A), can be moved radially outward under a load imposed by the eccentric (27) and which, for the purpose of locking the recliner (10), interact radially on the outside, by means of a toothed section, with the toothed rim (17) of the first recliner (11).

9. Recliner system according to one of the preceding claims, **characterized by** a backrest compensation spring (47) of spiral design, which is supported at the inner end thereof on a supporting bush (48).

10. Recliner system according to Claim 9, **characterized in that** the supporting bush (48) is fixed by its end on one of the recliner parts (11, 12), in particular being welded on by means of laser welding.

11. Recliner system according to Claim 1 and 10, **characterized in that** the supporting bush (48) has the at least one counterstop (51).

12. Recliner system according to Claim 11, **characterized in that** the stop module (150) is supported in such a way as to be rotatable within the supporting bush (48), wherein the at least one stop (150b) is formed on the outer circumferential side of the stop module (150), and the at least one counterstop (51) is formed on the inner circumferential side of the supporting bush (48).

13. Vehicle seat (1) having a seat part (3) and a backrest (4), which is attached to the seat part (3), can be pivoted relative to the latter and can be locked to it in different slope positions by means of a recliner system (5, 7, 10, 47, 50; 150) according to one of the preceding claims.

## Revendications

1. Système de ferrure pour un siège de véhicule, en particulier un siège de véhicule automobile, comprenant au moins une ferrure (10) qui présente une première partie de ferrure (11) et une deuxième partie de ferrure (12) qui peuvent être verrouillées l'une à l'autre et qui peuvent tourner l'une par rapport à l'autre autour d'un axe (A), une tige de transmission (7) dont la rotation déverrouille la ferrure (10), et un levier manuel (5) dont l'actionnement pour déverrouiller la ferrure (10) fait tourner la tige de transmission (7), un module de butée (50 ; 150) étant prévu, lequel est en liaison fonctionnelle d'une part avec le levier manuel (5) et d'autre part avec la tige de transmission (7), et lequel, dans au moins un sens de rotation, amène le levier manuel (5) et l'une des parties de ferrure (11, 12) en butée l'un par rapport à l'autre, le module de butée (50 ; 150) présentant au moins une butée (50b ; 150b) et l'une des parties de ferrure (11, 12) ou une partie (48) fixée à l'une des parties de ferrure (11, 12) présentant au moins une contre-butée (51), lesquelles coopèrent dans la direction périphérique de l'axe (A) et définissent en particulier la plage angulaire à l'intérieur de laquelle le module de butée (50 ; 150) peut tourner par rapport à l'une des ferrures (11, 12).

2. Système de ferrure selon la revendication 1, **caractérisé en ce qu'**un ressort de rappel (54) est prévu, lequel dans un sens de rotation, autorise la coopération de la butée (50b ; 150b) et de la contre-butée (51) et éventuellement fait tourner le module de butée (50 ; 150) dans une position de départ, le ressort de rappel (54) étant fixé notamment d'une part dans un accrochage de ressort (50f) du module de butée (50) et d'autre part sur un support (12h) de l'une des parties de ferrure (11, 12).

3. Système de ferrure selon l'une quelconque des revendications précédentes, **caractérisé en ce que** le module de butée (50 ; 150) est réalisé en forme de pot ou sous forme cylindrique creuse, en particulier en tant que pièce moulée par injection de plastique.

4. Système de ferrure selon l'une quelconque des revendications précédentes, **caractérisé en ce que** le module de butée (50 ; 150) et la tige de transmission sont connectés de manière solidaire en rotation l'un à l'autre, en particulier par le fait que la tige de transmission profilée (7) s'engage par engagement par correspondance de formes dans une ouverture centrale adaptée (50e ; 150e) du module de butée (50 ; 150).

5. Système de ferrure selon l'une quelconque des revendications précédentes, **caractérisé en ce que** le levier manuel (5) et le module de butée (50 ; 150) sont connectés l'un à l'autre de manière solidaire en rotation, en particulier au moyen d'au moins une arête (5d) s'étendant dans la direction axiale et d'au moins une rainure (50n) recevant l'arête (5d) ou au moyen d'autres saillies (5p) et de logements (150a) et/ou au moyen de crochets d'enclipsage (5c) et de rainures (150n).

6. Système de ferrure selon l'une quelconque des revendications précédentes, **caractérisé en ce qu'**il est prévu, pour une fixation axiale entre le levier manuel (5) et le module de butée (50), au moins un ergot d'encliquetage (50r) ou un crochet d'enclipsage (5c) orienté dans la direction radiale et au moins une ouverture (5e) recevant l'ergot d'encliquetage (50r) ou une rainure (150n) recevant les crochets d'enclipsage (5c), ou **en ce que** le levier manuel (5) et le module de butée (50) sont réalisés d'une seule pièce l'un avec l'autre.

7. Système de ferrure selon l'une quelconque des revendications précédentes, **caractérisé en ce que** pour une fixation axiale entre le module de butée (50) et un élément d'entraînement (21) de la ferrure (10), au moins une bague de fixation (24) avec laquelle en particulier un crochet d'enclipsage (50c) s'engage par l'arrière.

8. Système de ferrure selon l'une quelconque des revendications précédentes, **caractérisé par** une couronne dentée (17) réalisée au niveau de la première partie de ferrure (11), un excentrique (27) supporté à rotation autour de l'axe (A), qui peut être sollicité par un élément d'entraînement (21) pouvant être entraîné en rotation par la tige de transmission (7), et plusieurs verrous (16) qui sont guidés par la deuxième partie de ferrure (12) au moyen de segments de guidage (14) dans la direction radiale par rapport à l'axe (A), qui peuvent être déplacés radialement vers l'extérieur en étant sollicités par l'excentrique (27) et qui, pour verrouiller la ferrure (10), coopèrent au moyen d'une denture radialement à l'extérieur avec la couronne dentée (17) de la première partie de ferrure (11).

9. Système de ferrure selon l'une quelconque des revendications précédentes, **caractérisé par** un ressort de compensation de dossier (47) réalisé en forme de spirale, lequel est supporté par son extrémité intérieure contre une douille de support (48).

10. Système de ferrure selon la revendication 9, **caractérisé en ce que** la douille de support (48) est fixée par son côté frontal à l'une des parties de ferrure (11, 12), notamment au moyen d'un soudage laser.

11. Système de ferrure selon les revendications 1 et 10, **caractérisé en ce que** la douille de support (48) présente l'au moins une contre-butée (51).

12. Système de ferrure selon la revendication 11, **caractérisé en ce que** le module de butée (150) est supporté à rotation à l'intérieur de la douille de support (48), l'au moins une butée (150b) étant réalisée au niveau du côté périphérique extérieur du module de butée (150) et l'au moins une contre-butée (51) étant réalisée au niveau du côté périphérique intérieur de la douille de support (48).

13. Siège de véhicule (1) comprenant une partie de siège (3) et un dossier (4) qui est monté sur la partie de siège (3) au moyen d'un système de ferrure (5, 7, 10, 47, 50 ; 150) selon l'une quelconque des revendications précédentes, qui peut pivoter par rapport à celle-ci et qui peut être verrouillé avec différents ajustements de l'inclinaison.
